(19) Europäisches Patentamt
European Patent Office
Office européen des brevets

(11) Veröffentlichungsnummer: **0 014 258**
**B2**

(12) # NEUE EUROPÄISCHE PATENTSCHRIFT

(45) Veröffentlichungstag der neuen Patentschrift: **03.09.86**

(51) Int. Cl.⁴: **C 08 G 81/02,** C 08 B 15/00, C 04 B 24/24

(21) Anmeldenummer: **79105302.8**

(22) Anmeldetag: **21.12.79**

(54) **Wasserlösliche Makromolekularsubstanzen mit hohem Dispergier-, Suspendier- und Flüssigkeitsrückhaltevermögen und ihre Verwendung als Additiv.**

(30) Priorität: **03.01.79 DE 2900110**

(43) Veröffentlichungstag der Anmeldung: **20.08.80 Patentblatt 80/17**

(45) Bekanntmachung des Hinweises auf die Patenterteilung: **03.03.82 Patentblatt 82/9**

(45) Bekanntmachung des Hinweises auf die Entscheidung über den Einspruch: **03.09.86 Patentblatt 86/36**

(84) Benannte Vertragsstaaten: **BE DE FR GB IT NL SE**

(56) Entgegenhaltungen:
**CA-A-528 160**
**DE-A-1 518 213**
**DE-A-1 719 445**
**DE-A-2 519 927**
**GB-A-513 917**
**GB-A-859 414**
**US-A-2 879 268**
**US-A-3 072 635**
**US-A-3 117 949**
**US-A-3 268 459**
**US-A-3 912 529**
**US-A-4 021 257**

**Ullmann, Encyclopädie der techn. Chemie, 1975, "Celluloseäther", S. 199**
**Water-soluble resins, 1962, "Polyacrylamide", S. 153-168**

(73) Patentinhaber: **Wolff Walsrode Aktiengesellschaft, Postfach, D-3030 Walsrode 1 (DE)**

(72) Erfinder: **Böhmer, Branislav, Dr., Moorstrasse 61, D-3030 Walsrode (DE)**
Erfinder: **Hoppe, Lutz, Dr., Am Badeteich 8, D-3030 Walsrode (DE)**
Erfinder: **Dr. Szablikowski, Klaus, Claudius-Strasse, D-3030 Walsrode (DE)**
Erfinder: **Kudera, Dieter, Dr., Kreyengrund 20, D-3030 Walsrode (DE)**
Erfinder: **Behn, Rudolf, Rembrandtwinkel 8, D-3030 Walsrode (DE)**

(74) Vertreter: **Gremm, Joachim, Dr., Bayer AG c/o Zentralbereich Patente, Marken und Lizenzen, D-5090 Leverkusen 1, Bayerwerk (DE)**

**EP 0 014 258 B2**

LIBER, STOCKHOLM 1986

**Beschreibung**

Wassarlösliche Makromolekularsubstanzen mit hohem Dispergier-, Suspendier- und Flüssigkeitsrückhaltevermögen und ihre Verwendung als Additiv

Die Erfindung betrifft wasserlösliche, makromolekulare Substanzen aus Polysaccharidderivaten und überwiegend synthetischen Harzen und ihre Verwendung als Additiv, insbesondere zu Bauwerkstoffen.

Aus dem Stand der Technik sind schon zahlreiche Versuche bekannt, das Lösungsverhalten von Polysaccharidderivaten, insbesondere von Cellulosederivaten durch Modifizierung zu beeinflussen.

So werden in dar DE-OS 1 953 121 Cellulosederivate durch das Aufpfropfen von polymeren Verbindungen, wie z. B. Methylmethacrylat verwendet, um hydrophiie und saugfähige Produkte zu bekommen.

In der US-PS 3 682 856 wird gelehrt, dass durch Polyacrylatverbindungen modifizierte cellulosische Substanzen in ihrer Eigenschaft als Verdickungsmittel in wässrigen Systemen wesentlich leistungsfähiger werden, wenn man das makromolekulare wasserlösliche Endprodukt nach dem Trocknen einern einfachen Mahlprozess zur Zerkleinerung des Materials unterwirft. Ist das Produkt gemahlen, wirkt es noch in Mengen von bis herunter zu 0,1 Gew.-% als Verdickungsmittel. Über den Einsatz eines Verknüpfungsmittels ist in dieser Schrift jedoch nichts genannt.

Haft- und Wasserfestigkeit erzielt man nach der DE-AS 2 146 709 lediglich dann, wenn man einen Mörtel mit einzelnen Zusatzstoffen, wie Methylcellulose, Melaminformaldehydkondensationsprodukten und einem Polyacrylamid versetzt. Eine chemische Umsetzung dieser drei Komponenten ist nicht erwähnt.

Aus der DE-OS 2 435 558 ist eine für keramische Siebdruckfarben bestimmte Drei-Komponenten-Mischung, die im wesentlichen wasserlöslich ist, ersichtlich. Bifunktionelle Glykolverbindungen dienen dabei als Lösungsmittel für Vinylpolymerisate, denen wasserlösliche Celluloseäther in Form von Methylcellulose, Hydroxyäthylcellulose, Hydroxypropylcellulose, Methylhydroxypropylcellulose, Methylhydroxyäthylcellulose und Alkalisalz von Carboxymethylcellulose zugefügt sind. Aus vorstehender Druckschrift ist über eine chemische Reaktion dieser drei Komponenten untereinander nichts zu ersehen.

Die DE-OS 2 436 555 beschreibt lösliche Substanzen aus Verbindungen von Polysaccharidderivaten mit wenigstens überwiegend synthetischen Harzen, wobei auf Polysaccharidäther Acrylpolymere in bereits polymerisiertem Zustand chemisch in Form einer Pfropfung verknüpft werden.

Aus Seite 1, Absatz 3 der Beschreibung ist die Lehre zu entnehmen, dass gegenüber dem bisherigen Stand der Technik sich nicht nur Monomere ungesättigter organischer Verbindungen, sondern auch polymere Vinyl- und/oder Acrylverbindungen ohne Initiatoren direkt auf Stärkeäthern aufbringen und chemisch damit verknüpfen lassen. Die Reaktionsprodukte aus den Polysaccharidäthern und den Methacrylsäurecopolymerisaten sind vollkommen wasserlöslich. Als wasserlösliche Ausgangskomponenten sind u. a. Methacrylsäurecopolymerisat, Acrylsäure/Acrylnitrilcopolymerisat, Polyacrylsäure, Natriumpolyacrylat, ein Ammoniumsalz eines Polymethacrylats und teilhydrolysierter Polyvinylalkohol genannt. Der weiteren Lehre ist zu entnehmen, dass im Gegensatz zu lediglich gemischten makromolekularen Verbindungen hier die echte chemische Verknüpfungsverbindung in Form eines Pfropfpolymerisats von einerseits Polysaccharidäthern und andererseits Polyacrylatverbindungen als eine makromolekulare Reaktionssubstanz entstanden ist, die den vorgenannten lediglich gemischten Substanzen hoch überlegen ist im Hinblick auf das Verdickungsvermögen in Wasser, hinsichtlich ihrer guten Rieselfähigkeit, hinsichtlich der guten Dispergierbarkeit in Wasser und hinsichtlich ihres guten Quellvermögens. Die Schrift gibt jedoch keinerlei Auskunft über Übertragbarkeit der Erkenntnisse von Stärkeäthern auf Celluloseäther.

Andere Entwicklungen zur Verbesserung insbesondere des Wasserrückhaltevermögens von Celluloseäthern setzen als Celluloseätherverknüpfungssubstanz u. a. Bisacrylamidaessigsäure, Epichlorhydrin und andere Verbindungen ein. Die entstandenen Produkte sind jedoch in den zahlreichen Fällen nicht zu verwenden, in denen vollkommen wasserlösliche makromolekulare, durch Verknüpfung modifizierte Produkte benötigt werden.

Die weiterhin hier anzuführende DE-OS 2 647 420 zeigt eine interessante Weiterentwicklung auf, gemäss der die Herstellung eines modifizierten Polysaccharids wie Carboxymethylcellulose, Hydroxyäthylcellulose, eine wirksame Vernetzung der gepfropften Polysaccharidmoleküle an synthetisches Polymerisat grösserer Verknäulung von vernetzten Vinylpolymerisatmolekülen zur Stabilisierung der Polysaccharidmatrix beitragen. Es werden dabei keine wasserlöslichen makromolekularen Substanzen erhalten.

Das in der DE-OS 2 550 033 beschriebene Verfahren zur Herstellung von wasseraufnehmenden Celluloseäthern führt unter Einsatz des Verknüpfungsmittels Methylen-bis-methacrylamid auch zu einem teilweise wasserlöslichen Produkt.

Auch die Verfahren der DE-OS 2 712 043 führen zu wasserunlöslichen Polymerisaten. Es wird auf Cellulosederivate wie Carboxymethylcellulose, Hydroxyäthylcellulose und vernetzte Hydroxyäthylcellulose, Polyacrylamid aufgepfropft und mit einer Divinylverbindung, z. B. Methylen-bis-acrylamid vernetzt. Auf das bereits vernetzte wasserunlösliche Polymerisat wird noch einmal Glyoxal aufgebracht, was die Absorptionsfähigkeit der so gebildeten makromolekularen Substanz nochmals erheblich erhöhen soll.

Neben diesen zahlreichen Versuchen, überwiegend durch chemische Umsetzung zu wasserunlöslichen makromolekularen Produkten mit grossen Wasserrückhaltevermögen zu gelangen, bemühte man sich weiterhin, eine entsprechenden Leistungverbesserung durch Abmischung der Ausgangsverbindungen statt durch chemische Umsetzung zu erzielen. So wird in der DE-OS 2 758 499 zur Erzielung optimaler Leistung ein wasserlöslicher Cellulosseäther, wie z. B. Cellulosemethyläther, Hydroxypropylmethylcellulose,

Hydroxypropylcellulose oder Hydroxyäthylcellulose, mit anderen wasserlöslichen Polymerisaten, wie Polyvinylalkohol oder Polyacrylamid abgemischt. Mit diesen Mischungen soll die Kriechstromfesigkeit von Mörtel verbessert werden.

In der DE-OS 2 819 522 wird die chemische Verknüpfung von Oligosaccharidäthern mit makroporösen dreidimensionalen Copolymerisaten von Hydroxyalkylacrylaten oder Hydroxyalkylmethacrylaten über Verknüpfungsmittel aus der Gruppe der Divinyl- oder Polyvinylverbindungen in Form von Epichlorhydrinen. Äthylen-bis-acrylamiden und entsprechenden weiteren Verknüpfungmitteln beschrieben. Ausser den bereits genannten Oligosaccharid-Äthern sind auch natürliche modifizierte Polysaccharide, zum Teil in vernetzter Form, als Träger für a) das Verknüpfungsmittel und b) die damit verknüpfte Polyacrylatsubsanz, genannt. Die genannten makroporösen dreidimensionalen Copolymerisate sind hydrophil. Inwieweit man tatsächlich die hier gegebene tachnische Lehre für die Herstellung wesentlich davon verschiedener Substanzen, die mit Sicherheit keine Oligosaccharide oder deren Äther einschliessen, verwenden kann, ist sehr zweifelhaft. Tatsächlich werden die hier beschriebenen Substanzen ganz anderen Verwendungszwecken, nämlich einem Einsatz als spezifische Sorbentien zur Isolierung von physiologisch und biokatalytisch wirksamen Stoffen zugeführt.

Mit den erfindungsgemäss modifizierten Polysaccharidderivaten gelang es, vollkommen wasserlösliche makromolekulare Substanzen bereitzustellen, die auch ein optimales Dispergier-, Suspendier- und Wasserrückhaltevermögen besitszen.

Diese erfindungsgemäss modifizierten Makromolekularsubstanzen besitzen also im wesentlichen drei Bausteine, nämlich

1. Polysaccharidderivate,
2. wenigstens überwiegend synthetische Harze und
3. eines der nachfolgend genannten Verknüpfungsmittel, welches die Polysaccharidderivate mit diesen synthetischen Acrylharzen unter chemischer Verknüpfung dauerhaft verbindet.

Obwohl die Verknüpfungsmittel in Mengen eingesetzt werden, die nach dem Stande der Technik bei Einsatz von Divinylverbindungen gemäss der Lehre der DE-OS 2 712 043 zu wasserunlöslichen Produkten führen, sind die erfindungsgemäss modifizierten Celluloseäther wasserlöslich.

Gegenstand der Erfindung sind daher wasserlösliche, makromolekulare Substanzen mit hohem Dispergier-, Suspendier- und Wasserrückhaltevermögen hergestellt durch Umsetzung

a) wasserlöslicher Celluloseäther,
b) wasserlöslicher, wenigstens überwiegend synthetischer, Acryleinheiten aufweisender Polymerisate und
c) einem mindestans bifunktionellen Verknüpfungsmittel aus der Gruppe Epichlorhydrin, Glyoxal, Glyzid, Paraformaldehyd, Glutardialdehyd, Maleinsäureanhydrid, Epichlorhydrin-Polydiol, Glycidylmethacrylat, N-Methylolacrylamid, Äthylenglykoldimethacrylat, Tetraallyloloxyäthan, Tetraallyloxymethan, Glyoxal-bis-acrylamid, Bis-acrylamidoessigsäure, Acrylamidoglykolsäure oder Epichlorhydrin-Bisphenol A-Umsetzungsprodukte

im alkalischen Medium unter erhöhter Temperatur,

wobei der Anteil der mindestens bifunktionellen Verknüpfungsmittelkomponente (c), bezogen auf Monomereinheiten des Polymerisats (b), 1 bis 25 Mol-% und

der Anteil der Polymerisatkomponente (b), bezogen auf das Gesamtgewicht von Celluloseetherkomponente (a) und Polymerisatkomponente (b), 1 bis 25 Gew.-% beträgt.

Als wasserlösliche Celluloseäther werden bevorzugt Celluloseäther mit wiederkehrender glukosidisch verknüpfter Struktureinheit der allgemeinen Formel.

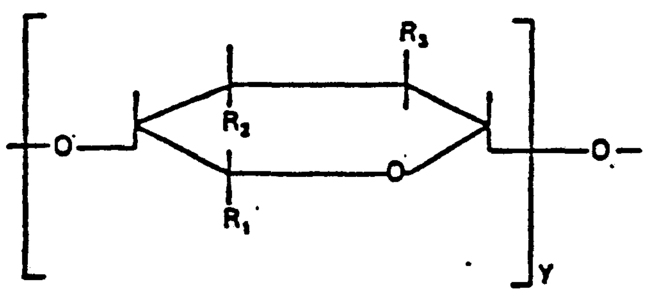

verwendet,
in welcher
y eine Zahl von wenigstens 2 ist und
$R_1$ bedeutet:

$-CH_2-O-CH_3$
(Methylsubstitution),

$-CH_2-O-CH_2-CH_2-OH$
(Hydroxyäthylsubstitution),

$-CH_2-O-CH_2-CH-OH$
|
$CH_3$
(Hydroxypropylsubititution).

$-CH_2-O-CH_2-CH_2-O-CH_3$
(Ox-Äthyl-Methyläthersubstitution),

$-CH_2-O-CH_2-COONa$
(Natriumcarboxymethylsubstitution), und
$R_1$ oder $R_3$ gleich oder verschieden bedeutet:

$-O-CH_3$
(Methylsubstitution),

$-O-CH_2-CH_2-OH$
(Hydroxyäthylsubstitution), oder

$-O-CH_2-CH-OH$
|
$CH_3$
(Hydroxypropylsubstitution),

$-CH_2-CH_2-O-CH_3$
(Hydroxyäthylmethylsubstitution),

$-O-CH_2-CH-O-CH_3$
|
$CH_3$
(Hydroxypropyl-Methylsubstitution), oder

$-O-CH_2-COONa$
(Natriumcarboxymethylsubstitution).

Als dritte wasserlösliche synthetische Acryleinheiten aufweisende Polymerisatkomponente kann vorteilhaft eine Substanz mit wiederkehrenden Struktureinheiten eingesetzt werden, die ausgewählt ist aus einer Gruppe in der Homo- und Copolymerisate von Acrylamid, Acrylamid-derivate, Acrylsäure, Methacrylsäure, 2-Acrylamido-2-methylpropansulfonsäure, Vinylcaprolactam, Vinylpyrrolidon, Acrylsäureester, Methacrylsäureester, ggf. teihydrolysiertes Acrylnitril, Acrylnitrilderivate, Pfropfcopolymerisate von Acrylamid auf Methylcellulose Pfropfcopolymerisate von Acrylamid und Acrylsäure auf Methylcellulose enthalten sind.

Besonders vorteilhaft im Bausektor insbesondere bei der Herstellung von Gips- und Zementputzen verwendbare erfindungsgemässe Makromolekularsubstanzen enthalten als wasserlösliche Celluloseätherkomponente eine Substanz, die ausgewählt ist aus einer Gruppe, in der Methylcellulose, Hydroxyäthylcellulose, Hydroxypropylmethylcellulose oder Carboxymethylcellulose allein oder in Abmischung mit Natriumchlorid enthalten sind und in welcher als Verknüpfungsmittelkomponente eine Substanz in Form von Struktureinheiten vorliegt, die ausgewählt ist aus einer Gruppe, in der Epichlorhydrin, Glyoxal, Glyoxal-bis-acrylamid, Glutardialdehyd, Glyzidyl-Methacrylat und Tetraallyloxymethan enthalten sind, und in welcher als wasserlösliche wenigstens überwiegend synthetische, Acryleinheiten aufweisende Polymerisatkomponente eine Substanz in Form wiederkehrender Struktureinheiten vorliegt, die ausgewählt ist aus einer Gruppe, in der ein Acrylamidhomopolymerisat, ein Acrylamid-Acrylsäure-Maleinsäureanhydrid-Copolymerisat, ein Acrylamid-Acrylsäure-Acrylnitrilcopolymerisat, ein Acrylamid-Methylcellulose-Pfropfpolymerisat, ein Acrylamid-Acrylsäure-Methylcellulose-Pfropfpolymerisat enthaltan sind. Die besten Ergebnisse auch im Hinblick auf die vorgenannte spezielle Verwendung dieser erfindungsgemässen wasserlöslichen Makromolekularsubstanzen erzielt man, wenn in diesen Substanzen der Anteil der wenigstens überwiegend synthetischen Polymerisatkomponente, bezogen auf das Gesamtgewicht von Celluloseätherkomponente und Polymerisatkomponente, 1 bis 25 Gew.-%, und davon bevorzugt 1,8 bis 9,0 Gew.-% beträgt und wenn der Anteil der mindestens bifunktionellen Verknüpfungsmittelkomponente, bezogen auf Monomereinheiten im wenigstens überwiegend synthetischen Polymerisat, 1 bis 25 Mol-%, in besonders günstigen Fällen 1,4 bis 20 Mol-% beträgt. An sich im Markt bekannt und daher sehr leicht erhältlich sind die Celluloseätherkomponenten Methylcellulose, Hydroxyäthylcellulose, Hydroxypropylmethylcellulose und das Natriumsalz der Carboxymethylcellulose der erfindungsgemässen wasserlöslichen Makromolekularsubstanz.

Wie aus den im Rahmen dieser Beschreibung hier später folgenden Beispielen als bevorzugte Ausführungsformen des Erfindungsgedankens ersichtlich ist, hat sich als synthetischer Polymerisatbaustein im erfindungsgemässen Makromolekül besonders Polyacrylamid bewährt (siehe Beispiele Nummern A-1 bis A-10 sowie B-5, B-8 bis B-9. Im Fall der Verwendung dieses Polyacrylamids als Baustein in der erfindungsgemässen

Makromolekularsubstanz kann die chemische 3-Komponentenverbindung wie folgt dargestellt werden, worin CA Celluloseäther bedeutet und XB Verknüpfungssubstanz bedeuten:

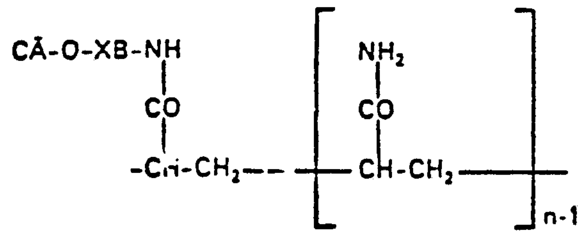

In der vorliegenden, aus Übersichtsgründen teilweise vereinfachten Strukturformel bedeutet n: Polymerisationsgrad des Polyacrylamidbausteins.

Im Rahmen der vorliegenden erfindungsgemässen Makromolekularsubstanz sind jedoch neben der vorstehenden dargestellten vereinfachten Strukturformel auch andere Verbindungen denkbar und vorhanden, von denen diejenige im folgenden herausgegriffen und dargestellt ist, bei welcher der Polyacrylamidbaustein nicht nur über eine Verknüpferbrücke an den Celluloseäther chemisch gebunden ist, sondern in der der Polyacrylamidbaustein selbst als Verknüpferbrücke dient zur chemischen Verknüpfung bzw. Kupplung bzw. Vernetzung von 2 benachbarten Celluloseätherketten-Makromolekülen:

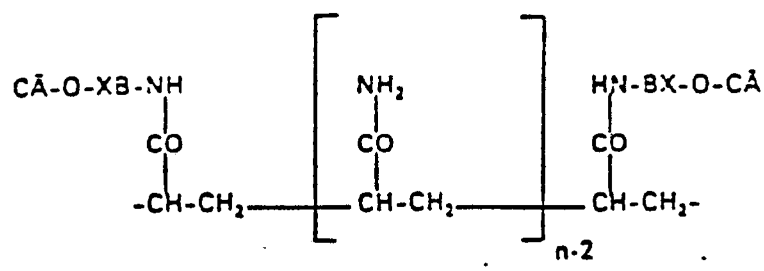

Auch in dieser, in den Rahmen der Erfindung fallenden Strukturformel bedeutet n der Polymerisationsgrad des Polyacrylaroids. Die Bezeichnungen XB bzw. BX sind Kurzformeln für den jeweiligen Verknüpfer.

Zur Herstellung der erfindungsgemässen Substanzen ist es empfehlenswert, dass im Rahmen einer unter anderem aus Ullmanns-Encyklopädie der Technischen Chemie, 4. Auflage, Band 9, Seite 200 bis 207 bekannten, dort beschriebenen und weitgehend üblichen Herstellung von Celluloseäthern diese wasserlösliche Komponente vor, während oder nach ihrer Entsalzung mit der die Verknüpfungskomponente in Abmischung bereits enthaltenden überwiegend synthetischen Polymerisationskomponente unter erhöhter Temperatur im alkalischen Medium chemisch umgesetzt wird und die so aus Celluloseäther-, Verknüpfungs- und Polymerisat-Komponente gebildete Makromolekularsubstanz getrocknet, gemahlen und korngrössendifferenziert gesiebt wird. Das vorstehend allgemein skizzierte erfindungsgemässe Verfahren gestattet es also, die seit langem üblichen Verfahrenstechniken zur Herstellung von Celluloseäthern beim Arbeiten nach der Erfindung voll auszunutzen. Hierbei wird bei der Ausübung des erfindungsgemässen Verfahrens die Modifizierung der Celluloseäther vor oder nach der Entfernung der Salze aus den Celluloseäthern bevorzugt.

Will man die erfindungsgemässe Modifizierung der Celluloseätherkomponente nach ihrer an sich bekannten Entsalzung durchführen, geht man zweckmässig nach der Entfernung der Salze so vor, dass man den gereinigten Celluloseäther homogen mit der Polymerisationskomponente, der bereits vorher die Verknüpferkomponente zugefügt worden war, verknetet und dabei unter gleichmässiger chemischer Umsetzung die Makromolekularsubstanz aus diesen 3 Komponenten gebildet wird. Das so erhaltene Reaktionsprodukt wird anschliessend getrocknet, gemahlen und korngrössendifferenziert gesiebt. Besonders gute Ausbeuten erhält man, wenn man das erfindungsgemässe Verfahren so ausübt, dass man nach der Entsalzung den Celluloseäther mit 1 bis 25 Mol-% des Verknüpfungsmittels, bezogen auf die Summe der Mole, gebildet aus den Molen der Monomereneinheiten im Polymerisat und zusätzlich aus den Molen des Verknüpfungsmittels, und weiterhin mit 1 bis 15 Gew.-% des wenigstens überwiegenden synthetischen Polymerisats, bezogen auf das Gesamtgewicht des Celluloseäthers und des Polymerisats zusammenführt und diese 3 Reaktionskomponenten unter einer homogenisierenden Verknetung innerhalb eines Zeitraums von 2 bis 7 Stunden bei einer Temperatur von 50 bis 90°C und einer alkalischen Reaktionsführung bei einem pH-Wert-Bereich von 8 bis 12 gegebenenfalls unter Inertgasatmosphäre ausreagieren lässt. Das auf diese Weise gebildete erfindungsgemässe Reaktionsprodukt in Form der oben genannten Makromolekularsubstanz wird dann bei 75 bis 90°C getrocknet und durch eine entsprechende Mahlung auf eine Korngrösse von 0,1 bis 250 µm in die verwendungsfähige wasserlösliche Makromolekularsubstanzform übergeführt. Besonders vorteilhaft arbeitet man, wenn man 1,4 bis 20 Mol% des Verknüpfungsmittels mit 3,5 bis 12,5 Gew.-% des Polymerisats mit der entsalzten Celluloseätherkomponente zusammenbringt und innerhalb eines Zeitraumes von 3 bis 6 Stunden bei einer Temperatur von 70 bis 85°C unter alkalischer Reaktionsführung bei einem pH-Wert-Bereich von 9,5 bis 11 Inertgasatmosphäre homogenisierend verknetet und anschliessend das so gebildete erfindungsgemässe Reaktionsprodukt bei 78 bis 82°C trocknet und schliesslich durch Mahlung auf eine

Korngrösse von 20 bis 100 µm in die verwendungsfähige Form dieser wasserlöslichen Makromolekularsubstanz bringt.

Will der Fachmann dagegen das erfindungsgemässe Verfahren so ausüben, dass er die wasserlösliche Celluloseätherkomponente bereits vor ihrer Entsalzung einsetzen will, kann dies ebenfalls erfolgen, jedoch ist zu empfehlen, dieses Verfahren hauptsächlich im Rahmen des Herstellungsprozesses von Methylcellulose auszuüben. Man geht am besten dann so vor, dass man die Methylcellulosekomponente vor ihrer Entsalzung mit dem gesondert bereits mit der Verknüpfungssubstanz versetzten Polymerisat homogen rührt und dabei unter gleichmässiger chemischer Umsetzung die erfindungsgemässe Makromolekularsubstanz, geformt aus der Methylcellulose-, der Verknüpfungs- und der Polymerisat-Komponente, sich bilden lässt und das so entstandene Reaktionsprodukt anschliessend wäscht, trocknet, mahlt und korngrössendifferenziert siebt.

Diese modifizierte Verfahrensweise ist dann besonders vorteilhaft, wenn die einzusetzende Methylcellulosekomponente als 11 bis 13 gew.-%ige wässrige Methylcellulosefasersuspension mit einem atro-Festsubstanzanteil von 50 bis 55 Gew.-% und entsprechend 50 bis 45 Gew.-% herstellungsbedingt angefallener Begleitsalze vorliegt. Diese sogenannte Rohmethylcellulosemasse wird dann mit dem Verknüpfungsmittel und dem Polymerisat in Kontakt gebracht, wobei die Mol-%-Menge des Verknüpfungsmittels, bezogen auf die Summe der Mole, wobei sich diese Summe aus den Molen der Monomereinheiten im Polymerisat und zusätzlich aus den Molen des Verknüpfungsmittels zusammensetzt, 1,4 bis 20 Mol-% (besonders bevorzugt 2,78 bis 11,1 Mol-%) beträgt, und wobei die Gew.-%-Menge des Polymerisats, bezogen auf das Gesamtgewicht von Methylcellulose und Polymerisat, 1 bis 20 Gew.-% (besonders bevorzugt 3,45 bis 20 Gew.-%) beträgt. Diese 3 vorgenannten Reaktionskomponenten werden unter beständiger homogenisierender Rührung innerhalb eines Zeitraums von 2,5 bis 3,5 (besonders bevorzugt 3) Stunden bei einer Temperatur von 80 bis 90°C (besonders bevorzugt 82 bis 85°C) unter alkalischer Reaktionsführung bei einem pH-Bereich von 9,0 bis 12 (besonders bevorzugt 10,0 bis 11,0) gegebenenfalls unter Inertgasatmosphäre umgesetzt. Das so gebildete erfindungsgemässe Reaktionsprodukt wird anschliessend wenigstens einmal mit 80 bis 95°C (besonders bevorzugt 85 bis 90°C) heissem Wasser gewaschen und damit gereinigt, nach der Waschung bei einer Temperatur von 75 bis 85°C (besonders bevorzugt 78 bis 82°C) getrocknet und durch eine Mahlung auf eine Korngrösse von 0,1 bis 250 µm (besonders bevorzugt 20 bis 100 µm) in die verwendungsfähige vollkommen wasserlösliche Makromolekularsubstanzform übergeführt.

Schematisch sind folgende Verknüpfungen der Reaktionspartner denkbar:

1. Celluloseäther-O-Verknüpfer-Polymerisat
2. Celluloseäther-O-Verknüpfer-Polymerisat-Verknüpfer-O-Celluloseäther.

Wie die später im Rahmen dieser Beschreibung folgenden Beispiele zeigen, lässt sich die so hergestellte erfindungsgemässe Makromolekularsubstanz aufgrund ihrer besonders vorteilhaften Parameter bevorzugt insbesondere als Additiv zu Bauwerkstoffen verwenden. Durch das besonders gute Dispergier- und Suspendiervermögen der erfindungsgemässen Makromolekularsubstanz erfolgt ihre bessere und gleichmässigere Verteilung in Bauwerkstoffen wie Mörtel und Zement.

Gleichzeitig zeigt das erfindungsgemässe Produkt besonders gute rheologische Eigenschaften, wodurch die Fliess- und Streichfähigkeit des mit dem Produkt versetzten Baumaterials in gewünschter Weise möglichst verlängert wird. Besonders wichtig aber ist die zu den eben genannten vorteilhaften Parametern noch hinzukommende bisher praktisch unerreichte Leistung auf dem Gebiet des Wasserrückhaltevermögens, wodurch sich die sogenannte Offenzeit der die erfindungsgemässe Makromolekularsubstanz enthaltenden Baustoffe optimal verlängert. Diese Offenzeit ist notwendig um mehr Zeit für die Nivellierung und die Flächenvergleichmässigung z. B. von Bauputzen zu erzielen. Als weiterer erheblicher Vorteil ist an dieser Stelle die hohe Wirksamkeit der Substanz anzuführen, da bereits Mengen von 0,05 bis 3 Gew.-%, berechnet auf Gesamtfestsubstanz genügen um als Zusatz zu Trockenputz auf Gipsbasis in der oben beschriebenen Weise vorteilhaft eingesetzt werden zu können. Verwendet man die erfindungsgemässe Makromolekularsubstanz als Zusatz zu Trockenputz auf Zementbasis, genügen im allgemeinen schon Mengen von 0,02 bis 2 Gew.-%, berechnet auf die Gesamtfestsubstanz, um die beschriebenen vorteilhaften Leistungen zu zeigen. Bei seiner Verwendung als Zusatz zu Zementmörtel bevorzugt man im allgemeinen Mengen von 0,03 bis 4 Gew.-% an erfindungsgemässer Makromolekularsubstanz, berechnet auf Gesamtfestsubstanz dieses Baustoffs.

Neben dieser bevorzugten Verwendungsmöglichkeit der erfindungsgemässen Makromolekularsubstanz kann die Substanz auch unter anderem als Verdickungsmittel zur Stabilisierung von Dispersionen, zur verdickungsbedingten Strömungsverbesserung von flüssigen wässrigen Medien, als Flockungshilfsmittel für aufzubereitende fliessfähige physikochemisch uneinheitliche Substanzen und schliesslich auch noch als Flockungshilfsmittel zur Aufarbeitung von anorganischen und organischen Schlämmen gut verwendet werden.

Im übrigen ist die aus den vorstehenden Vorwendungsmöglichkeiten zu ersehende weitgehende Einsetzbarkeit der erfindungsgemässen Makromolekularsubstanz nicht auf die vorgenannten Einsatzgebiete beschränkt, sondern überall da, wo Produkte mit den beschriebenen Parametern benötigt werden, angezeigt.

Während die Beispiele A-1 und B-1 ausführlich dargestellt sind, sind die folgenden weiteren Beispiele, da sie unter den gleichen Verfahrensbedingungen wie die Beispiele A-1 und B-1 durchgeführt worden sind, in verkürzter tabellarischer Form aufgeführt. Zur vollständigen Übersicht über das gesamte hier angeführte Beispielsmatrial wird auch das nachfolgende Textbeispiel A-1 und B-1 in die Übersichtstabelle mit aufgenommen.

Aus Platzgründen werden die in den Textbeispielen A-1 und B-1 voll ausgeschriebenen Substanznamen in der nachfolgenden Tabellenreihe nur noch in Form ihrer Abkürzungen aufgeführt. Es folgt daher bereits an

dieser Stelle eine Erklärung der in der nachstehenden Tabellenreihe verwendeten Kurzbezeichnungen für die chemischen Ausgangsprodukte unter Beifügung einiger Angaben zu ihrer Konzentration und zu dem Medium, in dem sie gelöst sind.

CD = Cellulose-Derivat

P = Polymerisat

1. CD-1:

Methylcellulose, handelsüblich, Warenzeichenname Walocel M®, Durchschnittssubstitutionsgrad 1,4 bis 2,0; Viskosität der 2 %igen wässrigen Lösung, ermittelt im Rotovisko-Gerät MV II der Firma Hake bei einem Schergefälle D = 2,55 $sec^{-1}$: 10 000 mPa.s; jedoch ohne Trocknung und Mahlung, im Flockzustand (aus der Produktion genommen) mit ca. 45 Gew.-% Wassergehalt.

2. CD-2:

Methylcellulose wie unter CD-1, jedoch mit einer Viskosität von 3000 mPa.s.

3. CD-3:

Hydroxyäthylcellulose (HEC), ein handelsübliches Produkt der Firma Hercules mit der Marktbezeichnung Natrosol 250 M®.

4. CD-4:

Hydroxypropylmethylcellulose (HPMC), ein handelsübliches Produkt mit der Handelsbezeichnung Walocel M®, Durchschnittssubstitutionsgrad ca. 1,6; Viskosität der 2 %igen wässrigen Lösung, ermittelt wie unter CD-1 im Rotovisko MV-II-Gerät der Firma Hake bei einem Schergefälle von D = 2,55 $sec^{-1}$ mit ca. 8000 mPa.s, jedoch ohne Trocknung und Mahlung im Flockzustand (aus der Produktion genommen) mit ca. 40 Gew.-% Wassergehalt.

5. CD-5:

Carboxymethylcellulose (CMC), Handelsname Antisol THS®, Durchschnittssubstitutionsgrad = 0,85; Viskosität der 3 %igen wässrigen Lösung (ermittelt wie unter CD-1) ca. 8000 mPa.s (D = 2,72 $sec^{-1}$); jedoch ohne Trocknung und Mahlung im Flockzustand (aus der Produktion genommen) mit einem Aktivgehalt (dem CMC-Fachmann geläufiger Ausdruck) von 45 bis 50 %.

6. CD-6:

6,5 gew.-%ige wässrige, NaCl-haltige Methylcellulose-Suspension (bei Temperaturen oberhalb 70°C). Das Produkt entspricht sonst der Methylcellulose, die unter CD-1 oben charakterisiert ist.

7. CD-7:

6,5 gew.-%ige wässrige, NaCl-haltige Methylcellulose-Suspension (bei Temperaturen oberhalb 70°C); diese Methylcellulose entspricht im übrigen dem unter CD-2 angeführten Produkt.

8. P-1:

Hochmolekulares Polyacrylamid-Homopolymerisat Walomer H-57®; Molekulargewicht ca. $3x10^7$.

9. P-2:

Polyacrylamid-Homopolymerisat, hergestellt durch übliche radikalische Polymerisationstechnik; Molekulargewicht ca. $5x10^5$.

10. P-3:

Copolymerisat aus Acrylamid/Acrylsäure/Maleinsäureanhydridmonomeren, hergestellt durch radikalische Copolymerisationstehnik mit einem Ausgangsverhätlnis der Monomeren von 3:1:1; Molekulargewicht ca. $1x10^6$.

11. P-4:

Pfropfpolymerisat von Acrylamid auf Methylcellulose im Verhältnis von 3:1 mittels radikalischer Pfropfung mit Cer-IV-Salzen und anschliessender Hydrolyse mit ca. 40 % Säuregruppen und einer Viskosität von 5000 mPa.s (gemessen in 1 %iger Lösung im Rotoviskometer der Firma Hake bei einem Schergefälle D = 2,55 $sec^{-1}$).

14. P-7:

Handelsübliches Pfropfcopolymerisat von Acrylamid und Acrylsäure auf Methylcellulose im Verhältnis von 3:1:1; wobei die radikalische Pfropfung mit Hilfe von Cer-4-Salzen erfolgt ist: Viskosität des Produkts 4 500 mPa.s (gemessen mit einer 1 %igen Lösung im Rotoviskosimeter bei einem Schergefälle D von 2,55 $sec^{-1}$).

15. P-8:

Handelsübliches Polyacrylamid-Homopolymersat mit einem Molekulargewicht von $1x10^7$ (Handelsname = Praestol 3000/74®).

16. P-9:

Handelsüblches Polyacrylamid-Polymerisat mit einem Molekulargewcht von ca, $6x10^6$ und einem Säuregruppengehalt von ca. 35 % (Handelsname Praestol 2850®).

17. P-10:

Copolyrmerisat aus Acrylnitril, Acrylamid und Acrylsäure im Verhältnis von 3:2:1, hergestellt durch radikalische Copolymerisationstechnik und anschliessender Hydrolisierung mit ca. 35 % Säuregruppen und einem Molekulargewicht von ca. $4x10^6$.

18. P-11:

Handelsübliches Epoxydharz in Form eines Kondensationsprodukts aus Bisphenol A und Epichlorhydrin. Handelsprodukt der Firma Shell Epicote 827®.

19. GBAM:

In den folgenden Tabellen verwendete Abkürzung für "Glyoxal-bis-acrylamid".

20. TaOÄ:

In den folgenden Tabellen verwendete Abkürzung für "Tetraallyloxyäthan".

Zur vorgehenden Zusammenstellung ist zu den unter CD-6 und CD-7 aufgeführten Produkten noch zu sagen, dass hier die Methylcellulosesuspension deswegen vorliegt, weil sie oberhalb von 70° C nicht in Wasser löslich ist. Unterhalb von 70° C liegt die Methylcellulose, da bei diesen Temperaturen wasserlöslich, in Wasser gelöst vor.

In sämtlichen der folgenden Beispiele liegt im übrigen das erfindungsgemäss erzeugte bzw. erfindungsgemäss verwendete Makromolekularprodukt in gemahlener Form vor, weil hierdurch die Leichtlöslichkeit in Wasser noch besonders gefördert wird.

Es folgen nun die erfindungsgemässen Beispiele. Soweit sich diese auf die Herstellung der erfindungsgemässen Makromolekularsubstanz im Kneter, d. h. unter Einsatz eines bereits entsalzten Celluloseäthers beziehen, sind diese mit den fortlaufenden Bezeichnungen A-1 bis A-26 versehen. Alle übrigen Produktherstellungsbeispiele, die sich auf die Darstellung der erfindungsgemässen Makromolekularsubstanz im Wäscher, d. h. vor der Entfernung der Reaktionssalze durch Waschen aus dem Roh-Celluloseäther, beziehen, sind fortlaufend mit der Bezeichnung B-1 bis B-9 versehen. In der 3. Tabelle sind die anwendungstechnischen Beispiele mit der fortlaufenden Bezifferung C-1 bis C-11 zusammengefasst.

**Beispiel A-1**

735 g ≙ 95,84 Gew.-% einer handelsüblichen Methylcellulose (Handelsname Walsroder MC®), die nicht getrocknet und gemahlen worden ist, sondern sich im Flockzustand befindet und nach der Entfernung der Salze einen Restwassergehalt von 45 Gew.-% aufweist, wird in einem üblichen Laborkneter (auch Feuchtgutmischer genannt) gut durchgeknetet und auf eine Temperatur von 80° C eingestellt. Zu dieser vorgenannten Menge an handelsüblicher homogenisierter Methylcellulose wird dann ein getrennt angefertigtes Gemisch aus 287,24 g einer 5 gew.-%igen wässrigen Polyacrylamidlösung mit 4,16 Gew -% Polyacrylamid im Gesamtgemisch und aus 0,74 Epichlorhydrin entsprechend 3,84 Mol-%, bezogen auf die Summe der Mole des Verknüpfungsmittels und der Monomereneinheiten im Polymerisat, im Kneter langsam zudosiert und die drei Komponenten durch Kneten gut homogenisiert verteilt. Gleichzeitig wird die durch die Zugabe zwischenzeitlich abgefallene Temperatur- des Komponentengemischs bei laufendem Kneter wieder auf 80° C erhöht und die Anlagerung und Verknüpfungsreaktion der 3 Komponenten untereinander unter fortwährendem Kneten innerhalb von 3 Stunden durch- und zu Ende geführt. Zur Vermeidung ungewünschter Nebenreaktionen wird während der gesamten Reaktionszeit der produktfreie Kneterraum ausreichend mit Stickstoff gespült. Nach Beendigung der Reaktion wird das gebildete erfindungsgemässe Makromolekularprodukt aus dem Kneter entfernt und 24 Stunden bei Raumtemperatur stehengelassen. Danach wird die Makromolekularsubstanz in einem an sich bekannten Umwälztrockenschrank bei 70° C 11 Stunden lang getrocknet und danach in üblicher Weise auf eine mittlere Korngrösse von 63 µm gemahlen. Das fertige Produkt ist wasserlöslich und besitzt ein hervorragendes Wasserrückhaltevermögen (siehe anwendungstechnisches Beispiel C-4)

Die in der folgenden Tabelle 1 aufgeführten erfindungsgemässen Beispiele A-2 bis A-24 wurden im Prinzip in der gleichen Weise unter den gleichen Verfahrensbedingungen wie im Beispiel 1 durchgeführt. Eine Wiederholung der Textangaben aus Beispiel A-1 erübrigt sich daher.

In allen Fällen, in denen die erfindungsgemässe Modifizierung des Celluloseäthers nicht im Kneter, sondern im Wäscher im Rahmen einer handelsüblichen Celluloseätherherstellung vorgenommen wird, ist zweckmässig wie in der im folgenden beschriebenen Beispielsserie B-1 bis B-10 vorzugehen. Hier benutzt man die im Wäscher im Rahmen des üblichen Herstellungsverfahrens sowieso herrschenden Temperaturen von 80 bis 90° C, die auch für die erfindungsgemässe Modifizierung des Celluloseäthers notwendig sind, um auf diese Weise erhebliche Mengen an Energie und Zeit einzusparen.

**Beispiel B-1:**

6000 g einer 6,5 gew-%igen, NaCl-haltigen Roh-Methylcellulosesuspension, welche näher in vorstehender Tabelle unter der Kurzbezeichnung CD-6 beschrieben ist, wird in ein temperierbares Rührgefäss gegeben und auf 85° C erwärmt. Dann wird der pH-Wert der Suspension mit Natronlauge auf 10,5 eingestellt. Getrennt hiervon wird eine Mischung, bestehend aus 556,6 g einer wässrigen 5 gew.-%igen Lösung eines Pfropfenpolymerisats, dessen Zusammensetzung in der vorstehenden Tabelle unter der laufenden Nummer 11 mit der Kurzbezeichnung P-4 beschrieben ist, und aus 1,07 g Epichlorhydrin hergestellt. Dieses so verbreitete Komponentengemisch wird dann unter Rühren zu der vorgenannten wässrigen Methyrcellulose-Suspension zugegeben und 3 Stunden unter beständigem Rühren bei 85° C geführt. Die so gebildete erfindungsgemässe Makromolekularsubstanz wird dann filtriert und dreimal mit je 1000 ml 90° C heissen Wassers gewaschen und das noch vorhandene Restwasser mittels eines wasserstrahlpumpenerzeugten Vakuums abgesaugt. Die so auf einer Nutsche filtrierte und gewaschene, gereinigte Makromolekularsubstanz wird dann auf einer Platte verteilt und in einem Luftumwälztrockenschrank 11 Stunden lang bei einer Temperatur von 80° C gründlich getrocknet und anschliessend in üblicher Weise auf eine mittlere Korngrösse von 63 µm gemahlen.

Sowohl das nach dem vorstehenden Beispiel A-1 wie auch nach dem Beispiel B-1 hergestellte erfindungsgemässe makromolekulare Produkt war vollkommen wasserlöslich und zeigte ein hervorragendes Wasserrückhaltevermögen (vergleiche in Tabelle 3 die entsprechenden Beispiele C-4 und C-11).

Es folgen nun die Tabelle 1 mit den Beispielen A-1 bis A-24 und die Tabelle 2 mit den Beispielen B-1 bis B-9.

**Tabelle 1**

A) Beispiele für die Modifikation im Kneter:

| Beispiel Nr. | Cellulose-Derivat | Polymerisat | Polymerisat Gew.-%, soweit Gemisch | Polymerisat Gew.-% bezogen auf Atro Gesamtgemisch | Verknüpfungsmittel in Mol-% | | Reaktionsbedingungen Temperatur in °C | pH | Zeit in Stunden |
|---|---|---|---|---|---|---|---|---|---|
| A-1 | CD-1 | P-1 | - | 4,16 | Epichlorhydrin | 3,84 | 80 | 10,5 | 3 |
| A-2 | CD-1 | P-1 | - | 6,80 | Epichlorhydrin | 3,22 | 85 | 11,0 | 3 |
| A-3 | CD-1 | P-1 | - | 5,26 | Epichlorhydrin | 6,25 | 72 | 10,0 | 3 |
| A-4 | CD-1 | P-1 | - | 3,50 | Epichlorhydrin | 2,77 | 75 | 10,0 | 3 |
| A-5 | CD-1 | P-1 | - | 3,50 | Epichlorhydrin | 1,40 | 90 | 12,0 | 6 |
| A-6 | CD-1 | P-1 | - | 12,50 | Epichlorhydrin | 6,25 | 78 | 10,5 | 3 |
| A-7 | CD-1 | P-1 | - | 9,84 | Epichlorhydrin | 14,30 | 72 | 10,0 | 3 |
| A-8 | CD-1 | P-1 | - | 3,50 | Glyoxal | 3,84 | 75 | 10,5 | 3 |
| A-9 | CD-1 | P-1 | - | 6,80 | Glyoxal | 3,22 | 68 | 10,0 | 6 |
| A-10 | CD-1 | P-2 | - | 3,50 | Glyoxal | 3,84 | 70 | 10,0 | 6 |
| A-11 | CD-1 | P-3 | - | 3,50 | Glyoxal | 3,84 | 70 | 10,5 | 6 |
| A-12 | CD-1 | P-2 | - | 4,50 | Epichlorhydrin | 6,25 | 78 | 10,5 | 3 |
| A-13 | CD-1 | P-4 | - | 4,50 | Epichlorhydrin | 3,84 | 80 | 10,5 | 3 |
| A-14 | CD-1 | P-10 | - | 4,50 | Epichlorhydrin | 3,84 | 80 | 10,5 | 3 |
| A-15 | CD-2 | P-7 | - | 5,26 | Epichlorhydrin | 3,84 | 80 | 10,0 | 3 |
| A-16 | CD-1 | P-10 | - | 4,16 | Epichlorhydrin | 6,25 | 85 | 10,5 | 3 |
| A-17 | CD-1 | P-9 | - | 4,16 | Epichlorhydrin | 6,25 | 88 | 11,0 | 3 |
| A-18 | CD-4 | P-2<br>P-11 | 80<br>20 | 4,76 | Epichlorhydrin | 3,84 | 85 | 10,5 | 3 |
| A-19 | CD-1 | P-2 | - | 6,25 | G-BAM | 3,84 | 90 | 11,0 | 6 |
| A-20 | CD-5 | P-10 | - | 6,25 | Glyoxal | 6,25 | 90 | 11,0 | 6 |
| A-21 | CD-2 | P-9 | - | 6,25 | Epichlorhydrin | 3,84 | 85 | 10,5 | 4 |
| A-22 | CD-1 | P-1 | - | 5,26 | Glutardialdehyd | 5,26 | 80 | 10,5 | 3 |
| A-23 | CD-1 | P-1 | - | 5,26 | Glyzidylmethacrylat | 5,26 | 90 | 10,5 | 6 |
| A-24 | CD-1 | P-7 | - | 4,76 | TAoÄ | 3,84 | 90 | 11,0 | 6 |

**Tabelle 2**

B) Beispiele für die Modifikation im Wäscher

| Beispiel Nr. | MC-Typen | Polymerisat-typen- | Polymer-Gew.-% im Gesamtgemisch | Verknüpfungsmittel | in Mol-% | Reaktionsbedingungen Temperatur in°C | pH | Zeit in Stunden |
|---|---|---|---|---|---|---|---|---|
| B-1 | CD-6 | P-4 | 6,66 | Epichlorhydrin | 3,8 | 85 | 10,5 | 3 |
| B-2 | CD-6 | P-4 | 8,33 | Epichlorhydrin | 6,25 | 85 | 11,0 | 3 |
| B-3 | CD-6 | P-4 | 3,45 | Epichlorhydrin | 11,1 | 85 | 10,0 | 3 |
| B-4 | CD-6 | P-4 | 20,00 | Epichlorhydrin | 2,78 | 85 | 10,5 | 3 |
| B-5 | CD-6 | P-1 | 6,66 | Epichlorhydrin | 4,76 | 82 | 11,0 | 3 |
| B-6 | CD-6 | P-8 | 6,66 | Epichlorhydrin | 4,76 | 85 | 10,5 | 3 |
| B-7 | CD-6 | P-10 | 6,66 | Epichlorhydrin | 4,76 | 85 | 10,5 | 3 |
| B-8 | CD-6 | P-1 | 6,66 | Glyoxal | 4,76 | 82 | 10,5 | 3 |
| B-9 | CD-7 | P-1 | 6,66 | Glyoxal | 4,76 | 85 | 11,0 | 3 |

Aus der grossen Anzahl vorstehender erfindungsgemässer und auch erfindungsgemäss hergestellter Makromolekularsubstanzen wird in Teil ausgewählt, um in einer Gegenüberstelung zu den zur Zeit auf dem Markt befindlichen handelsüblichen Stand-der-Technik-Produkten die Überlegenheit der erfindungsgemässen Erzeugnisse im Hinblick auf ihre hinsichtlich der Verwendung im Bausektor wichtigste Eigenschaft, ihr Wasserrückhaltevermögen, unter Beweis zu stellen.

Hierzu wird eine Standardmethode, die sogenannte Wolff-Walsrode-Methode zur Bestimmung des Wasserrückhaltevermögens verwendet.

Zunächst wird ein Chromatographiepapier mit 2 Lauffrontlinien A und B zwischen zwei Metallringe gelegt. Darauf wird ein Gummikonus so auf das Papier gestellt, dass sein kleinerer äusserer Durchmesser die Lauffrontlinie A im Papier berührt. Daraufhin wird etwa 20°C warmes Wasser in einer Porzellanschale vorgelegt und zwar fur den Gipsputztest entweder 28 oder 32 ml und für den Zementputztest 18 oder 20 ml.

Es werden nun 50 g Trockenputz auf Gipsbasis der zu 70 Gew.-% aus Stuck-Gips (Hersteller Dr. Wirt) und zu 26 Gew.-% aus Kalksand mit einer Körnung von 0,2 mm (Hersteller Firma Lonza) und zu 4 Gew.-% aus Kalkhydrat besteht, mit 0,1 g der erfindungsgemässen Makromolekularsubstanz vermischt. Bei Einsatz von Trockenputz auf Zementbasis, der aus 15 Gew.-% Zement (Portland-Zement PZ 350) und zu 75 Gew.-% aus Quarzsand (Hersteller Westdeutsche Quarzsandwerke Dr. Müller in Dorsten) und zu 10 Gew.-% aus Kalkhydrat besteht, wird diesem Zementputz 0,05 g der erfindungsgemässen Makromolekularsubstanz zugefügt. In beiden Fällen wird der jeweilige Trockenputz mit dem jeweiligen Zusatz an erfindungsgemässer Makromolekularsubstanz sorgfältig vermischt und in das vorgelegte Wasser der o.a. Menge gegeben. Anstelle der Menge an erfindungsgemässer Makromolekularsubstanz (siehe Tabelle 3, Beispiele C-4 bis C-11) wird die entsprechende Menge, nämlich ebenfalls 0,1 bzw. 0,05 g Celluloseäther auch bei den Vergleichsbeispielen C-1, C-2 und C-3 gemäss folgender Tabelle 3 gegeben und zu allen Versuchen naturgemäss die gleichen, im folgenden näher beschriebenen Versuchsbedingungen eingehalten:

Die auf dem Chromatographiepapier eingezeichnete Wasserfrontstartlinie A und die ebenso dort ersichtliche Wasserfrontziellinie B kennzeichnen den Laufweg, den die Wasserfront im Papierchromatographiepapier zurücklegen muss, und welche mit Rücksicht auf die hierzu benötigte Laufzeit ein Kennzeichen für das Wasserrückhaltevermögen ist. Zunächst wird das

Wasser mit einer Gabel innerhalb von 25 Sekunden restlos in den zu testenden Putz eingearbeitet und dann die Mischung in den Gummikonus eingefüllt. Die Konsistenz des Putz-Wassergemisches muss so beschaffen sein, dass die Papieroberfläche innerhalb des Konusses völlig benetzt wird.

Die ermittelte Laufzeit zwischen dem Laufzeitbeginn bei der Linie A und dem Laufzeitende bei der Linie B ergibt die in der folgenden Tabelle aufgetragene reine Laufzeit.

**Tabelle 3**

Wasserrückhalteversuche; Untersuchungen, durchgeführt nach der vorstehend beschriebenen Methode Wolff Walsrode.

| Beispiel Nr. | Celluloseäther Produkt | Wasserrückhaltevermögen im Gipsputz 28 ml Wasser in Sekunden | Wasserrückhaltevermögen im Gipsputz 32 ml Wasser in Sekunden | Wasserrückhaltevermögen im Zementputz 18 ml Wasser in Sekunden | Wasserrückhaltevermögen im Zementputz 20 ml Wasser in Sekunden |
|---|---|---|---|---|---|
| C-1 | Methylcellulose; handelsübliches Produkt Handelsname Walocel M® der Fa. Wolff Walsrode AG | 330 | 185 | 212 | 155 |
| C-2 | Methylcellulose; handelsübliches Produkt der. Fa. Hoechst AG Handelsname Tylose S 15 000 X® | 400 | - | 295 | - |
| C-3 | Methylcellulose; handelsübliches Produkt der Fa. Henkel/Düsseldorf Handelsname Culminal C 6070/15® | 685 | 291 | 480 | 270 |
| C-4 | A-1 | 1500 | 470 | 635 | 392 |
| C-5 | A-2 | 1680 | 410 | 594 | 380 |
| C-6 | A-4 | 1540 | 448 | 553 | 425 |
| C-7 | A-9 | 1546 | 409 | 600 | 440 |
| C-8 | A-12 | 1280 | 375 | 520 | 340 |
| C-9 | B-1 | 1310 | 390 | 585 | 370 |
| C-10 | B-5 | 1220 | 355 | 570 | 352 |
| C-11 | B-8 | 1405 | 430 | 610 | 412 |

Die aus vorstehenden Tabelle 3 ersichtlichen Messargebnisse durch Gegenüberstellung einerseits der Vergleichversuche C-1, C-2 und C-3 und anderseits der erfindungsgemässen Versuche, nämliche C-4 bis C-1 zeigen deutlich, dass die erfindungsgemässen Produkte A-1 bis B-8, den handelsüblichen Produkten bezüglich des Wasserrückhaltevermögens erheblich überlegen sind. Diese bemerkenswert grosse Überlegenheit der erfindungsgemässen Produkte zeigt sich sowohl bei der Prüfung im Gipsputz als auch bei der Prüfung im Zementputz. Sämtliche Werte wurden unter Verwendung eines einheitlichen Chromatographiepapiers, nämlich der Nummer 2040 b (Hersteller Schleicher und Schüll) erzielt.

Bemerkenswert ist insbesondere, dass die dargelegte Überlegenheit der erfindungsgemässen Produkte unabhängig von der Art der Herstellung ist, d. h. Produkte aus der B-Reihe sind genauso gut wie die Produkte der A-Reihe. Dies ist auch als ein Beweis dafür zu werten. dass das erfindungsgemässe Produkt hinsichtlich seiner Parameter in bestimmten Bereichen verfahrensunabhängig ist.

**Patentansprüche**

1. Wasserlösliche, makromolekulare Substanzen mit hohem Dispergier-, Suspendier- und Wasserrückhaltevermögen, erhalten durch Umsetzung von
a) wasserlöslichen Celluloseethern,
b) wasserlöslichen, wenigstens überwiegend synthetischen Acryleinheiten aufweisenden Polymerisaten, und
c) einem mindestens bifunktionellen Verknüpfungsmittel aus der Gruppe Epichlorhydrin, Glyoxal, Glyzid, Paraformaldehyd, Glutardialdehyd, Maleinsäureanhydrid, Epichlorhydrin-Polydiol, Glycidylmethacrylat, N-Methylolacrylamid, Äthylenglykoldimethacrylat, Tetraallyloloxyäthan, Tetraallyloxymethan, Glyoxal-bis-acrylamid, Bis-acrylamidoessigsäure, Acrylamidoglykolsäure oder Epichlorhydrin-Bisphenol A-Unsetzungsprodukte
im alkalischen Medium unter erhöhter Temperatur,
wobei der Anteil der mindestens bifunktionellen Verknüpfungsmittelkomponente (c), bezogen auf Monomereinheiten des Polymerisats (b) 1 bis 25 Mol-% und
der Anteil der Polymerisatkomponente (b), bezogen auf das Gesamtgewicht von Celluloseetherkomponente (a) und Polymerisatkomponente (b), 1 bis 25 Gew.-% beträgt.

2. Wasserlösliche Substanzen nach Anspruch 1, dadurch gekennzeichnet, daß der Anteil der Verknüpfungsmittelkomponente 1,4 bis 20 Mol-% beträgt.

3. Wasserlösliche Substanzen nach Anspruch 1 oder 2, dadurch gekennzeichnet, daß als wasserlösliche

Celluloseether Methylcellulose, Hydroxyethylcellulose, Hydroxypropylmethylcellulose oder Carboxymethylcellulose und als wasserlösliche, synthetische Acryleinheiten aufweisende Polymerisatkomponente ein Homo- und Copolymerisate von Acrylamid, Acrylamidderivate, Acrylsäure, Methacrylsäure, 2-Acrylamido-2-methylpropansulfonsäure, Vinylcaprolactam, Vinylpyrrolidon, Acrylsäureester, Methacrylsäureester, gegebenenfalls teilhydrolysiertes Acrylnitril, Acrylnitrilderivate, Pfropfcopolymerisate von Acrylamid auf Methylcellulose oder Pfropfcopolymerisate von Acrylamid und Afrylsäure auf Methylcellulose verwendet werden.

4. Wasserlösliche Substanzen nach Ansprüchen 1 bis 3, dadurch gekennzeichnet, daß der Anteil der Polymerisatkomponente 1,8 bis 9,0 Gew.-% beträgt.

5. Wasserlösliche Substanzen nach Ansprüchen 1 bis 4, dadurch gekennzeichnet, daß die Substanz in einer Korngröße von 0,1-250 µm Vorliegt.

6. Verwendung der wasserlöslichen Substanzen nach Ansprüchen 1 bis 5 als Zusatz zu Trockenputz auf Gipsbasis oder Zementbasis oder als Zusatz zu Zementmörtel.

## Claims

1. Water-soluble, macromolecular substances with a high dispersing, suspending and water-retention capacity, obtained by reacting

a) water-soluble cellulose ethers,

b) water-soluble, at least predominantly synthetic polymers containing acrylic units and

c) an at least bifunctional linking agent from the group comprising epichlorohydrin, glyoxal, glycidyl, paraformaldehyde, glutaric dialdehyde, maleic anhydride, epichlorohydrin-polydiol, glycidyl methacrylate, N-methylolacrylamide, ethylene glycol dimethacrylate, tetraallyloloxyethane, tetraallyloxymethane, glyoxal-bis-acrylamide, bis-acrylamidoacetic acid, acrylamidoglycolic acid or epichlorohydrin/bisphenol A reaction products,

in an alkaline medium at an elevated temperature, the quantity of the at least bifunctional linking agent component c), based on the monomer units of the polymer b), being 1 to 25 mol % and the quantity of the polymer component b), based on the total weight of the cellulose ether component a) and the polymer component b), being 1 to 25 % by weight.

2. Water-soluble substances according to Claim 1, characterised in that the quantity of the linking agent component is 1.4 to 20 mol %.

3. Water-soluble substances according to Claim 1 or 2, characterised in that methyl cellulose, hydroxyethyl cellulose, hydroxypropyl methyl cellulose or carboxymethyl cellulose are used as the water-soluble cellulose ethers and a homopolymer and copolymers of acrylamide, acrylamide derivatives, acrylic acid, methacrylic acid, 2-acrylamido-2-methylpropane sulphonic acid, vinyl caprolactam, vinyl pyrrolidone, acrylic acid ester, methylacrylic acid ester, optionally partially hydrolysed acrylonitrile, acrylonitrile derivatives, graft copolymers of acrylamide on methyl cellulose or graft copolymers of acrylamide and acrylic acid on methyl cellulose are used as the water-soluble, synthetic polymer component containing acrylic units.

4. Water-soluble substances according to Claims 1 to 3, characterised in that the quantity of the polymer component is 1.8 to 9.0 % by weight.

5. Water-soluble substances according to Claims 1 to 4, characterised in that the substance is present in a particle size of 0.1-250 µm.

6. Use of the water-soluble substances according to Claims 1 to 5 as an additive in dry plaster based on gypsum or cement or as an additive in cement mortar.

## Revendications

1. Substances macromoléculaires hydrosolubles à haut pouvoir de dispersion, de suspension et de rétention de l'humidité, obtenues par réaction

a) d'éthers cellulosiques hydrosolubles,

b) de polymères synthétiques contenant au moins en proportion prépondérante des motifs acryliques et

c) d'un agent de liaison au moins bifonctionnel choisi parmi les suivants: épichlorhydrine, glyoxal, glucide, paraformaldéhyde, dialdéhyde glutarique, anhydride maléique, épichlorhydrinepolydiol, méthacrylate de glycidyle, N-méthylolacrylamide, diméthacrylate de l'éthylèneglycol, tétraallyloloxyéthane, tétraallyloxyméthane, glyoxal-bis-acrylamide, acide bis-acrylamidoacétique, acide acrylamidoglycolique et produits de réaction épichlorhydrine-Bisphénol A,

à température ambiante en milieu alcalin, la proportion du composant agent de liaison au moins bifonctionnel (c), par rapport aux motifs monomères du polymère (b), étant de 1 à 25 moles % et la proportion du composant polymère (b), par rapport au poids total du composant éther cellulosique (a) et du composant polymère (b), étant de 1 à 25 % en poids.

2. Substances hydrosolubles selon la revendication 2, caractérisées en ce que la proportion du composant de

liaison au moins bifonctionnel est de 1,4 à 20 moles %.

3. Substances hydrosolubles selon les revendications 1 à 3, caractérisées en ce qu'elles contiennent, en tant qu'éthers cellulosiques hydrosolubles, la méthylcellulose, l'hydroxyéthylcellulose, l'hydroxypropylméthylcellulose ou la carboxyméthylcellulose et en tant que composant polymère synthétique hydrosoluble contenant des motifs acryliques des homo- et co-polymères de l'acrylamide, de dérivés d'acrylamide, de l'acide acrylique, de l'acide méthacrylique, de l'acide 2-acrylamido-2-méthylpropane-sulfonique, du vinylcaprolactame, de la vinylpyrrolidone, d'esters acryliques, d'esters méthacryliques, de l'acrylonitrile éventuellement hydrolysé en partie, de dérivés de l'acrylonitrile, des copolymères greffés de l'acrylamide sur la méthylcellulose ou des copolymères greffés de l'acrylamide et de l'acide acrylique sur la méthylcellulose.

4. Substances hydrosolubles selon les revendications 1 à 3, caracterisées en ce que la proportion du composant polymère est de 1,8 à 9,0 % en poids.

5. Substances hydrosolubles selon les revendications 1 à 4, caractérisées en ce qu'elles sont présentes à une dimension de grains de 0,1 à 250 µm.

6. Utilisation des substances hydrosolubles selon les revendications 1 à 5, en tant qu'additif à un enduit sec à base de plâtre ou à base de ciment ou en tant qu'additif à du mortier de ciment.